# EUROPÄISCHE PATENTSCHRIFT

(11) **EP 3 762 242 B1**
(45) Veröffentlichungstag und Bekanntmachung des Hinweises auf die Patenterteilung: **23.03.2022**
(21) Anmeldenummer: 19701040.8
(22) Anmeldetag: 10.01.2019
(51) Int. Cl.: B60C 13/00, B60R 13/00

(54) **POLYMERPRODUKT**
POLYMER PRODUCT
PRODUIT POLYMÈRE

(30) Priorität: 09.03.2018 DE 102018203572
(43) Veröffentlichungstag der Anmeldung: 13.01.2021
(73) Patentinhaber: Continental Reifen Deutschland GmbH, 30165 Hannover (DE)
(72) Erfinder: METZ, Markus, 30419 Hannover (DE)
(74) Vertreter: Continental Corporation
(86) Internationale Anmeldenummer: PCT/EP2019/050483
(87) Internationale Veröffentlichungsnummer: WO 2019/170303

(56) Entgegenhaltungen:
- EP-B1- 2 809 528

## Beschreibung

Die Erfindung betrifft ein Polymerprodukt, vorzugsweise ein Fahrzeugreifen mit Seitenwänden, mit einer fotorealistischen Darstellung auf der äußeren Oberfläche des Polymerproduktes, wobei die fotorealistische Darstellung aus der Kombination einer Struktur mit einem Relief der Darstellung besteht, wobei die Struktur Erhebungen und Vertiefungen aufweist und wobei das Relief eine Tiefenkarte der Darstellung ist, die vorzugsweise auf Basis von Grauwerten eines Fotos erzeugt ist und die bis zu 256 Tiefenabstufungen aufweist, derart, dass das Relief die Vertiefungen der Struktur je nach Grauwert in unterschiedlichen Höhen füllt.

Polymerprodukte sind beispielsweise Kfz-Interieurteile wie Tür- und Seitenverkleidungen, wie Konsolenverkleidungen sowie Fahrzeugreifen. KFZ-Interieurteile weisen Werkstoffe wie PVC, PU, TPO auf.

Der Begriff "Darstellung" umfasst dabei Abbildungen, Firmennamen, Firmenlogos, Farbkennzeichnungen, Informationsdaten, Identifikationscodes, etc..

Darstellungen auf Polymerprodukten, insbesondere auf Interieurteilen und Reifenseitenwänden sollen eine hohe Fertigungsqualität aufweisen, eine hohe Qualitätsanmutung erzeugen sowie das Polymerprodukt gegenüber anderen Polymerprodukten optisch hervorheben. Dieses wird z.B. in Bezug auf den Fahrzeugreifen durch das Aufbringen von (farbigen) Folien auf die Reifenseitenwand erreicht. Die Folien werden üblicherweise auch "Vulkanetten" genannt. Das Aufbringen dieser Folien ist jedoch aufwändig und teuer.

Daher ist man bestrebt, die Darstellungen kostengünstig und ohne gesonderte Arbeitsschritte auf/in dem Polymerprodukt selber anordnen zu können.

Eine Lösung hierfür offenbart die EP 280 95 28 B1 der Anmelderin, welche den nächstliegenden Stand der Technik bildet. Die Struktur ist hier eine gerichtete, regelmäßige, symmetrische, dreidimensionale Struktur wie beispielsweise eine Schraffur. Die Darstellung ist durch eine entsprechend ausgestaltete Formfläche formgebend in die äußere Oberfläche des Polymerproduktes "geprägt". Es ist keine gesonderte Folie, kein gesondertes Polymermaterial und kein weiterer nachgeordneter Arbeitsschritt zum Erhalt der fotorealistischen Darstellung in Qualität eines monochromen Fotos notwendig.

Es hat sich jedoch gezeigt, dass die fotorealistische Darstellung des nächstliegenden Standes der Technik richtungsabhängig ist, d.h. dass die Wahrnehmung der Darstellung je nach Blickrichtung und Lichteinfall auf diese Darstellung verschieden ist.

Im Hinblick auf den nächstliegenden Stand der Technik ist es die Aufgabe der Erfindung, ein kostengünstiges Polymerprodukt zur Verfügung zu stellen, das auf seiner äußeren Oberfläche eine Darstellung aufweist, die dem Polymerprodukt eine hochqualitative Anmutung und eine hohe Fertigungsqualität verleiht, die jedoch aus verschiedenen Blickrichtungen nahezu gleich ist.

Gelöst wird die Aufgabe, indem die Struktur eine ungerichtete, unregelmäßige, unsymmetrische, dreidimensionale Textur aus Erhebungen und Vertiefungen ist.

Es ist erfindungsgemäß ein Polymerprodukt geschaffen, das eine fotorealistische Darstellung auf seiner äußeren Oberfläche aufweist. Die fotorealistische Darstellung entspricht qualitativ der eines monochromen Fotos. Hierdurch ist dem Polymerprodukt in kostengünstiger Weise eine hochqualitative Anmutung und eine hohe Fertigungsqualität verliehen.

Die Darstellung ist durch eine entsprechend ausgestaltete Formfläche formgebend in die äußere Oberfläche des Polymerproduktes "geprägt". Es ist keine gesonderte Folie, kein gesondertes Polymermaterial und kein weiterer Arbeitsschritt notwendig.

Es hat sich gezeigt, dass die Kombination von einer ungerichteten Textur mit einem Relief der abzubildenden Darstellung zu einer fotorealistischen Darstellung führt, die der eines monochromen Fotos entspricht und überraschenderweise aus jedem Blickwinkel etwa gleich wahrzunehmen ist. Die Abbildung wirkt bionisch und natürlich. Durch die ungerichtete Textur ist die fotorealistische Darstellung aus jeder Blickrichtung in etwa gleich wahrzunehmen. Das Relief lässt sich als eine Tiefenkarte der Darstellung beschreiben, die z.B. auf Basis von Grauwerten (schwarz bis weiß) eines Fotos erzeugt ist und bis zu 256 Tiefenabstufungen aufweist. Das Relief füllt die Aussparungen der Textur je nach Grauwert in unterschiedlichen Höhen aus. Je stärker die Aussparung gefüllt ist, desto heller erscheint die Darstellung an dieser Stelle. Ist die Aussparung nicht ausgefüllt, erscheint diese schwarz. Ist die Aussparung (etwa) komplett ausgefüllt, erscheint diese quasi weiß. Durch eine Abstufung von beispielsweise bis zu 256 Füllstufen der Aussparungen ist eine sehr detaillierte, fotorealistische Darstellung erhalten, die der eines monochromen Fotos entspricht. Die reliefartige Qualität einer dreidimensionalen Darstellung ist durch die Kombination aus Darstellung mit Textur deutlich übertroffen.

Die Darstellung kann über die Oberfläche des Polymerproduktes hinausragen. Die Darstellung kann beispielsweise auch in die Oberfläche des Polymerproduktes integriert sein, derart, dass die Oberfläche des Polymerproduktes mit der Oberfläche der Textur fluchtet und nicht aus der Oberfläche des Polymerproduktes hervorsteht. Die Darstellung kann aber ebenfalls vertieft eingebracht sein.

Zweckmäßig ist es, wenn die maximale Höhe des Reliefs 0,8 bis 1,0, vorzugsweise 0,85 bis 0,95 x der Höhe der Textur entspricht.

Zweckmäßig ist es, wenn die Höhe der Textur in einem Bereich von 100µm bis 1000µm, bevorzugt in einem Bereich von 100µm bis 500µm, besonders bevorzugt in einem Bereich von 200µm bis 300µm liegt, wobei sich die Höhe anhand einer senkrecht auf dem Texturgrund stehenden Geraden vom Texturgrund bis zur äußeren Oberfläche der Textur bemisst.

Zweckmäßig ist es, wenn die Höhen der Texturelemente der Textur maximal 20% voneinander abweicht, wobei von dem niedrigsten und der höchsten Texturelement ausgegangen wird.

Zweckmäßig ist es, wenn der Texturgrund in einer gedachten Ebene in einem einzigen Höhenniveau liegt.

Das Polymerprodukt ist vorzugsweise ein Interieurteil eines Kraftfahrzeuges oder ein Fahrzeugreifen, welcher die Darstellung auf zumindest einer Seitenwand aufweist.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine hälftige Ansicht eines Fahrzeugreifens mit einer fotorealistischen Darstellung auf der Seitenwand;
Fig. 2 einen Radialschnitt entlang A-A durch die fotorealistische Darstellung des Fahrzeugreifens der Fig.1.

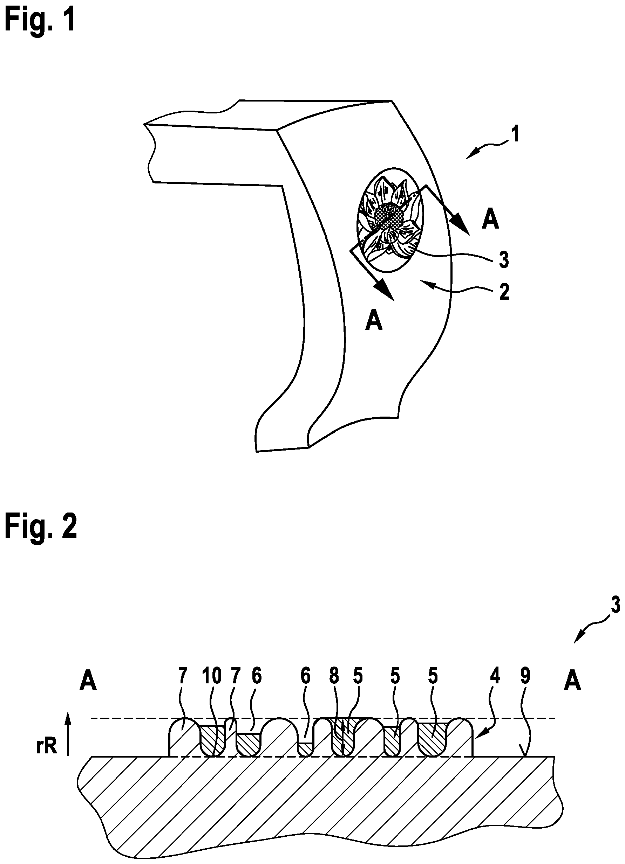

Die Fig. 1 zeigt eine hälftige Ansicht eines Fahrzeugreifens 1 mit einer Seitenwand 2, wobei die Seitenwand 2 eine fotorealistische Darstellung 3 aufweist.

Der Radialschnitt der **Fig. 2****,** welcher entlang der Schnittlinie A-A durch die fotorealistische Darstellung 3 des Fahrzeugreifens 1 der Fig.1 geführt ist, zeigt schematisch das Prinzip, wie die fotorealistische Darstellung 3, welche der eines monochromen Fotos entspricht, durch eine Textur 4 in Kombination bzw. in Überlagerung mit einem Relief 5 der Darstellung erhalten ist. Die Textur 4 und das Relief 5 sind gegenüber der Oberfläche der Seitenwand 9 erhöht angeordnet. Die Textur 4 weist Erhebungen 7 als Texturelemente und Vertiefungen 8 auf und ist ungerichtet, unregelmäßig, unsymmetrisch und dreidimensional. Das Relief 5 füllt die Vertiefungen 6 der Textur 4 in unterschiedlichen Höhen aus. Die Höhe der Füllung bestimmt den erhaltenen Grauwert. Eine vollständige Füllung ergibt einen quasi weißen Farbton. Ist die Vertiefung 6 nicht gefüllt, ergibt dieses einen schwarzen Farbton. Der Texturgrund liegt in einer gedachten Ebene (gestrichelte untere Linie) in einem Höhenniveau. Die Erhebungen 7 der Textur 4 sind säulenartige Texturelemente mit halbkugelartige äußerer Oberfläche. Die äußere Oberfläche der Erhebungen liegt ein einer zweiten gedachten Ebene (gestrichelte obere Linie). Die Längsachse der säulenartigen Texturelemente ist in radialer Richtung (rR) ausgerichtet. Die Höhe 8 der Textur liegt in einem Bereich von 200µm bis 300µm, wobei sich die Höhe 8 anhand einer senkrecht auf dem Texturgrund 10 stehenden Geraden vom Texturgrund 10 bis zur äußeren Oberfläche der Textur bemisst.

### Bezugszeichenliste

### (Teil der Beschreibung)

- 1: Fahrzeugreifen
- 2: Seitenwand
- 3: fotorealistische Darstellung
- 4: Textur
- 5: Relief der Darstellung /Füllung
- 6: Vertiefung
- 7: Erhebung / Texturelement
- 8: Höhe der Textur
- 9: Oberfläche der Seitenwand
- 10: Texturgrund

- rR: radiale Richtung

## Patentansprüche

1. Polymerprodukt, vorzugsweise ein Fahrzeugreifen (1) mit Seitenwänden (2), mit einer fotorealistischen Darstellung (3) auf der äußeren Oberfläche des Polymerproduktes (2), wobei die fotorealistische Darstellung aus der Kombination einer Struktur mit einem Relief (5) der Darstellung besteht, wobei die Struktur Erhebungen (7) und Vertiefungen (6) aufweist und wobei das Relief (5) eine Tiefenkarte der Darstellung ist, die vorzugsweise auf Basis von Grauwerten eines Fotos erzeugt ist und die bis zu 256 Tiefenabstufungen aufweist, derart, dass das Relief (5) die Vertiefungen (6) der Struktur je nach Grauwert in unterschiedlichen Höhen füllt,
**dadurch gekennzeichnet, dass** die Struktur eine ungerichtete Textur (4) aus Erhebungen (7) und Vertiefungen (6) ist.

2. Polymerprodukt nach Anspruch 1,
**dadurch gekennzeichnet, dass** die maximale Höhe des Reliefs 0,8 bis 1,0, vorzugsweise 0,85 bis 0,95 x der Höhe (8) der Textur entspricht.

3. Polymerprodukt nach Anspruch 1 oder 2, **dadurch gekennzeichnet, dass** die Höhe (8) der Textur in einem Bereich von 100µm bis 1000µm, bevorzugt in einem Bereich von 100µm bis 500µm, besonders bevorzugt in einem Bereich von 200µm bis 300µm liegt, wobei sich die Höhe (8) anhand einer senkrecht auf dem Texturgrund (10) stehenden Geraden vom Texturgrund (10) bis zur äußeren Oberfläche der Textur (4) bemisst.

4. Polymerprodukt nach einem oder mehreren der vorangehenden Ansprüche, **dadurch gekennzeichnet, dass** die Höhe (8) der Texturelemente (7) der Textur maximal 20% voneinander abweicht, wobei von dem niedrigsten und der höchsten Texturelement (7) ausgegangen wird.

5. Polymerprodukt nach einem oder mehreren der vorangehenden Ansprüche, **dadurch gekennzeichnet, dass** der Texturgrund (10) in einer gedachten Ebene in einem einzigen Höhenniveau liegt.

6. Polymerprodukt nach einem oder mehreren der vorangehenden Ansprüche, **dadurch gekennzeichnet, dass** die Textur (4) sich aus einer unregelmäßigen Anordnung (Streuung), entweder von weichen organischen Texturelementen (7), wie zb. Halbkugeln oder amorphen Elementen zusammensetzt, wie Schaum, Schwamm, oder aus harten kantigen Texturelementen, wie zb. Pyramiden, Polygonen, etc. besteht wie Schleifpapier, , wobei die Textur (4) vorzugsweise nur ähnliche Texturelemente enthält.

7. Polymerprodukt nach einem oder mehreren vorangehenden Ansprüchen, **dadurch gekennzeichnet, dass** dieses ein Interieurteil eines Kraftfahrzeuges oder ein Fahrzeugreifen (1) ist, welcher die Darstellung auf zumindest einer Seitenwand (2) aufweist.

## Claims

1. Polymer product, preferably a vehicle tire (1) with sidewalls (2), comprising a photorealistic representation (3) on the outer surface of the polymer product (2), wherein the photorealistic representation consists of the combination of a structure with a relief (5) of the representation, wherein the structure has elevations (7) and depressions (6) and wherein the relief (5) is a depth chart of the representation that is preferably produced on the basis of grayscale values of a photo and has up to 256 gradations of depth in such a way that the relief (5) fills the depressions (6) of the structure to different heights according to the grayscale value,
**characterized in that** the structure is an undirected texture (4) composed of elevations (7) and depressions (6) .

2. Polymer product according to Claim 1, **characterized in that** the maximum height of the relief corresponds to 0.8 to 1.0, preferably 0.85 to 0.95, times the height (8) of the texture.

3. Polymer product according to Claim 1 or 2, **characterized in that** the height (8) of the texture is within a range from 100 µm to 1000 µm, preferably within a range from 100 µm to 500 µm, more preferably within a range from 200 µm to 300 µm, wherein the height (8) is judged from the texture base (10) up to the outer surface of the texture (4) on a straight line perpendicular to the texture base (10).

4. Polymer product according to one or more of the preceding claims, **characterized in that** the height (8) of the texture elements (7) of the texture varies by not more than 20%, proceeding from the lowest and highest texture elements (7).

5. Polymer product according to one or more of the preceding claims, **characterized in that** the texture base (10) is in a theoretical plane at a single height level.

6. Polymer product according to one or more of the preceding claims, **characterized in that** the texture (4) is composed of an irregular arrangement (scatter), either of soft organic texture elements (7), for example hemispheres or amorphous elements (such as foam, sponge) or of hard angular texture elements, for example pyramids, polygons, etc. (such as abrasive paper), wherein the texture (4) preferably contains solely similar texture elements.

7. Polymer product according to one or more of the preceding claims, **characterized in that** it is an interior part of a motor vehicle or a motor vehicle tire (1) that has the representation on at least one sidewall (2).

## Revendications

1. Produit polymère, de préférence un pneumatique de véhicule (1) pourvu de parois latérales (2), ledit produit comprenant une représentation photo-réaliste (3) sur la surface extérieure du produit polymère (2), la représentation photo-réaliste comprenant la combinaison d'une structure avec un relief (5) de la représentation, la structure comportant des élévations (7) et des dépressions (6) et le relief (5) étant une carte en profondeur de la représentation, qui est de préférence générée sur la base de valeurs de gris d'une photo et qui comporte jusqu'à 256 échelonnements en profondeur de telle sorte que le relief (5) remplit les dépressions (6) de la structure à différentes hauteurs en fonction de la valeur de gris,
**caractérisé en ce que** la structure est une texture non dirigée (4) comprenant des élévations (7) et des dépressions (6).

2. Produit polymère selon la revendication 1, **caractérisé en ce que** la hauteur maximale du relief correspond à 0,8 à 1,0, de préférence de 0,85 à 0,95, x la hauteur (8) de la texture.

3. Produit polymère selon la revendication 1 ou 2, **caractérisé en ce que** la hauteur (8) de la texture est comprise dans une gamme allant de 100 µm à 1000 µm, de préférence dans une gamme allant de 100 µm à 500 µm, de manière particulièrement préférée dans une gamme allant de 200 µm à 300 µm, la hauteur (8) étant mesurée depuis la base de texture (10) jusqu'à la surface extérieure de la texture (4) à partir d'une droite perpendiculaire à la base de texture (10).

4. Produit polymère selon une ou plusieurs des revendications précédentes, **caractérisé en ce que** les hauteurs (8) des éléments (7) de la texture s'écartent les unes des autres de 20 % maximum, à partir des éléments de texture les plus bas et les plus hauts (7).

5. Produit polymère selon une ou plusieurs des revendications précédentes, **caractérisé en ce que** la base de texture (10) est située dans un plan imaginaire à un seul niveau de hauteur.

6. Produit polymère selon une ou plusieurs des revendications précédentes, **caractérisé en ce que** la texture (4) se compose d'un ensemble irrégulier (diffusion), soit d'éléments de texture organiques mous (7), comme par exemple des hémisphères ou des éléments amorphes, comme de la mousse, une éponge, soit d'éléments de texture durs et angulaires, comme par exemple des pyramides, des polygones, etc., comme du papier de verre, la texture (4) ne contenant de préférence que des éléments de texture similaires.

7. Produit polymère selon une ou plusieurs des revendications précédentes, **caractérisé en ce qu'**il s'agit d'une pièce intérieure d'un véhicule automobile ou d'un pneumatique de véhicule (1) qui comporte la représentation sur au moins une paroi latérale (2).
